# EUROPÄISCHE PATENTANMELDUNG

(11) **EP 3 516 957 A1**
(43) Veröffentlichungstag der Anmeldung: **31.07.2019**
(21) Anmeldenummer: 18153677.2
(22) Anmeldetag: 26.01.2018
(51) Int. Cl.: A01K 9/00

(54) **MILCHWAGEN MIT DOSIERSTEUERUNG**

(71) Anmelder: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(57) **Zusammenfassung**

Milchwagen zur Fütterung von Nutztieren, insbesondere Kälbern, mit • einem Vorratsbehälter (10,12) zur Aufnahme eines flüssigen Nahrungsmittels, • einer Abgabevorrichtung (12,14) zum Abgeben des flüssigen Nahrungsmittels, • einer Pumpe (14,16) zum Fördern des flüssigen Nahrungsmittels aus dem Vorratsbehälter (10,12) zu der Abgabevorrichtung (12,14) und • einer Dosiersteuerung (24,26), die dazu ausgebildet ist, die Pumpe (14,16) für eine definierte Pumpenlaufzeit anzusteuern, um eine vorgegebene Abgabemenge des flüssigen Nahrungsmittels abzugeben, wobei • Sensormittel vorgesehen sind, die dazu ausgebildet sind, eine Höhe zu erfassen, in der die Abgabevorrichtung (12,14) angeordnet ist, wobei die Dosiersteuerung (24,26) dazu ausgebildet ist, die Pumpenlaufzeit unter Berücksichtigung dieser Höhe zu ermitteln.

## Beschreibung

Die Erfindung betrifft einen Milchwagen zur Fütterung von Nutztieren, insbesondere Kälbern, bei dem ein flüssiges Nahrungsmittel von einer Pumpe aus einem Vorratsbehälter zu einer Abgabevorrichtung gefördert wird. Zum Dosieren einer vorgegebenen Abgabemenge des flüssigen Nahrungsmittels steuert eine Dosiersteuerung die Pumpe für eine definierte Pumpenlaufzeit an.

Derartige Milchwagen haben sich bewährt, um eine größere Anzahl von Nutztieren einfach mit einem flüssigen Nahrungsmittel wie Vollmilch oder Milchaustauscher versorgen zu können. Mit der Abgabevorrichtung kann die für jedes Tier vorgesehene Futtermittelmenge einfach auf Knopfdruck beispielsweise in einen Tränkeeimer eingefüllt werden.

Für eine exakte Dosierung der abzugebenden Menge ist grundsätzlich eine Messung der Abgabemenge mit einem Durchflusssensor möglich. Einfache Durchflusssensoren mit beweglichen, im Flüssigkeitsstrom angeordneten Teilen (beispielsweise einem Flügelrad) sind jedoch aus hygienischen Gründen nachteilig, insbesondere bei der Fütterung leicht verderblicher Futtermittel wie Vollmilch. Berührungslose Durchflusssensoren, die die Durchflussmenge beispielsweise induktiv erfassen, sind technisch aufwendig und, insbesondere wenn eine hohe Genauigkeit der Messung erzielt werden soll, entsprechend teuer.

Anstatt die Durchflussmenge zu messen, kann eine Kalibrierung der Förderleistung der Pumpe vorgenommen werden. Ist der Zusammenhang zwischen Pumpenlaufzeit und Abgabemenge bekannt, kann eine vorgegebene Abgabemenge durch Ansteuern der Pumpe für eine bestimmte Pumpenlaufzeit abgegeben werden.

Aus der Druckschrift DE 20 2014 102 419 U1 ist ein Kalibrierverfahren für einen Milchwagen bekannt geworden, bei dem mithilfe eines Füllstandsensors einmal zu Beginn und ein zweites Mal nach einem definierten Ansteuern der Pumpe ein Füllstand des Vorratsbehälters erfasst und daraus die Abgabemenge berechnet wird.

Davon ausgehend ist es die Aufgabe der Erfindung, einen Milchwagen zur Fütterung von Nutztieren zur Verfügung zu stellen, der mit einfachen Mitteln eine genauere Dosiersteuerung ermöglicht.

Diese Aufgabe wird gelöst durch den Milchwagen mit den Merkmalen des Anspruchs 1. Vorteilhaft Ausgestaltungen sind in den Unteransprüchen angegeben.

Der Milchwagen dient zur Fütterung von Nutztieren, insbesondere Kälbern, und hat
- einen Vorratsbehälter zur Aufnahme eines flüssigen Nahrungsmittels,
- eine Abgabevorrichtung zum Abgeben des flüssigen Nahrungsmittels,
- eine Pumpe zum Fördern des flüssigen Nahrungsmittels aus dem Vorratsbehälter zu der Abgabevorrichtung und
- eine Dosiersteuerung, die dazu ausgebildet ist, die Pumpe für eine definierte Pumpenlaufzeit anzusteuern, um eine vorgegebene Abgabemenge des flüssigen Nahrungsmittels abzugeben, wobei
- der Milchwagen Sensormittel aufweist, die dazu ausgebildet sind, eine Höhe zu erfassen, in der die Abgabevorrichtung angeordnet ist, wobei die Dosiersteuerung dazu ausgebildet ist, die Pumpenlaufzeit unter Berücksichtigung dieser Höhe zu ermitteln.

Der Vorratsbehälter kann ein Volumen beispielsweise im Bereich von 100 l bis 600 l aufweisen. Der Milchwagen kann einen Griff aufweisen, an dem er geschoben oder gezogen werden kann. Der Milchwagen kann einen Fahrantrieb aufweisen, was den Transport insbesondere größerer Futtermittelmengen vereinfacht. Im Inneren des Vorratsbehälters kann ein Rührwerk angeordnet sein. Der Milchwagen kann eine Heizeinrichtung zum Temperieren und/oder Pasteurisieren des Futtermittels aufweisen.

Die Abgabevorrichtung hat eine Abgabeöffnung, aus der das Futtermittel direkt beispielsweise in einen Tränkeeimer abgefüllt werden kann. Die Abgabevorrichtung kann einen Handgriff aufweisen. Sie kann über einen Schlauch mit einer Ausgangsseite der Pumpe verbunden sein. Eine Eingangsseite der Pumpe ist mit dem Vorratsbehälter verbunden. Die Pumpe kann elektrisch angetrieben sein. Zur Stromversorgung der Pumpe kann der Milchwagen eine wiederaufladbare Batterie aufweisen.

Der Milchwagen kann eine Eingabevorrichtung aufweisen, mit der eine gewünschte Abgabemenge vorgegeben werden kann. Diese Abgabemenge kann beispielsweise im Bereich von 0,2 l bis 4 l liegen. Um eine auf diese Weise vorgegebene Abgabemenge abzugeben, steuert die Dosiersteuerung die Pumpe für eine definierte Pumpenlaufzeit an.

Bei der Erfindung weist der Milchwagen Sensormittel auf, die eine Höhe erfassen, in der die Abgabevorrichtung angeordnet ist. Die Dosiersteuerung berücksichtigt diese Höhe bei der Ermittlung der Pumpenlaufzeit. Die Sensormittel können die Höhe insbesondere relativ zur Pumpe/zu einem Ausgang der Pumpe erfassen. In diesem Fall entspricht die erfasste Höhe einer Förderhöhe der Pumpe bei der Abgabe des Futtermittels.

Die Erfindung beruht auf der Erkenntnis, dass die während einer bestimmten Pumpenlaufzeit tatsächlich abgegebene Futtermittelmenge erheblich von der zu überwindenden Höhendifferenz beeinflusst ist. Versuche haben ergeben, dass die während derselben Pumpenlaufzeit ausdosierte Menge beim Befüllen einer bodennah angeordneten Tränke mit entsprechend niedrig angeordneter Abgabevorrichtung um 15 % bis 18 % größer sein kann, als beim Befüllen eines an einer Kälberbox angeordneten Tränkeeimers. Durch die erfindungsgemäße Berücksichtigung der Höhe der Abgabevorrichtung können diese Effekte durch eine automatische Anpassung der Pumpenlaufzeit vollständig oder fast vollständig kompensiert werden. Eine manuelle Kalibrierung ist hierfür nicht erforderlich.

In einer Ausgestaltung weisen die Sensormittel einen Drucksensor auf, der so angeordnet ist, dass er einen hydrostatischen Druck an einem Ausgang der Pumpe erfasst. Die Dosiersteuerung kann insbesondere dazu ausgebildet sein, diesen Druck vor einem Abgabevorgang/vor jedem Abgabevorgang und bei Stillstand der Pumpe auszuwerten. Diese Ausgestaltung geht davon aus, dass eine Verbindungsleitung zwischen der Ausgangsseite der Pumpe und der Abgabevorrichtung vor einem Dosiervorgang bereits mit Futtermittel gefüllt ist, sodass der hydrostatische Druck an der Ausgangsseite der Pumpe Aufschluss über die Höhe bietet. In diesem Fall gelingt die Erfassung der Höhe mit einem Drucksensor besonders einfach.

In einer Ausgestaltung weisen die Sensormittel einen Abstandssensor auf, der an der Abgabevorrichtung angeordnet und dazu ausgebildet ist, einen Abstand der Abgabevorrichtung vom Boden zu erfassen. Der Abstandssensor kann beispielsweise ein Ultraschallsensor sein. Er kann so an der Abgabevorrichtung angeordnet sein, dass er automatisch nach unten gerichtet ist, wenn sich die Abgabevorrichtung in einer Abgabeposition befindet. Mithilfe eines Abstandsensors ist eine besonders genaue Bestimmung der Höhe möglich. Dies gilt insbesondere, wenn die Bodenhöhe unter der Abgabevorrichtung der Höhe des Bodens entspricht, auf der der Milchwagen steht. Dies ist in typischen Fütterungssituationen der Fall.

In einer Ausgestaltung weisen die Sensormittel einen Beschleunigungssensor auf, der an der Abgabevorrichtung angeordnet ist. Die von dem Beschleunigungssensor erfassten Beschleunigungsinformationen ermöglichen ebenfalls eine Bestimmung der Höhe der Abgabevorrichtung.

In einer Ausgestaltung weisen die Sensormittel einen Drucksensor auf, der an der Abgabevorrichtung angeordnet ist und einen Umgebungsluftdruck erfasst. Der Umgebungsluftdruck nimmt mit der Höhe kontinuierlich ab. Es sind preiswerte Drucksensoren verfügbar, die selbst kleine Änderungen des Umgebungsluftdrucks so genau erfassen, dass eine hinreichend präzise Höheninformation gewonnen werden kann. Bekannte Beispiele derartiger Drucksensoren werden auch als barometrische Drucksensoren oder MEMS -Drucksensoren bezeichnet (*Micro Electro Mechanical Systems*)*.*

In einer Ausgestaltung umfasst die Dosiersteuerung eine Auswerteeinrichtung, die dazu ausgebildet ist, ein Ausgangssignal der Sensormittel von einem ersten Zeitpunkt an, in dem sich die Abgabevorrichtung auf einer Referenzhöhe befindet, bis zu einem Abgabezeitpunkt fortlaufend auszuwerten, um die Höhe im Abgabezeitpunkt zu bestimmen. Bei dieser Ausgestaltung ist die von den Sensormitteln zur Verfügung gestellte Höheninformation auf die Referenzhöhe bezogen. Möglich ist dies beispielsweise bei Verwendung eines Beschleunigungssensors, dessen Ausgangssignale aufintegriert werden können, um die Höhenänderung zu ermitteln. Diese Möglichkeit besteht auch bei der erläuterten Verwendung eines Drucksensors, der den Umgebungsluftdruck an der Abgabevorrichtung erfasst.

In einer Ausgestaltung weist der Milchwagen eine Halterung für die Abgabevorrichtung auf, die die Referenzhöhe bestimmt. Beispielsweise kann die Abgabevorrichtung während der Fahrt in die Halterung eingesetzt werden. Wird die Abgabevorrichtung dann vor einem Abgabevorgang aus der Halterung entnommen, liegt die Referenzhöhe fest.

In einer Ausgestaltung weisen die Sensormittel einen weiteren Drucksensor auf, der in einer festen Höhe am Milchwagen angeordnet ist und einen Umgebungsluftdruck erfasst. Insbesondere kann die Dosiersteuerung dazu ausgebildet sein, die Höhe auf Grundlage einer Differenz von Messwerten des Drucksensors an der Abgabevorrichtung und des weiteren Drucksensors zu ermitteln. Auf diese Weise wird eine hohe Genauigkeit der Höheninformation erzielt. Zugleich ist eine kontinuierliche Auswertung der von den Drucksensoren gelieferten Informationen nicht erforderlich. Zu jedem beliebigen Zeitpunkt kann aus der erfassten Druckdifferenz die Höhe bestimmt werden.

In einer Ausgestaltung weist der Milchwagen ein Bedienelement zum Auslösen eines Abgabevorgangs auf und die Dosiersteuerung ist dazu ausgebildet, die Pumpenlaufzeit unter Berücksichtigung der zum Zeitpunkt einer Betätigung des Bedienelements erfassten Höhe zu ermitteln. Das Bedienelement kann beispielsweise am Vorratsbehälter oder einem Handgriff des Milchwagens angeordnet sein oder an der Abgabevorrichtung. Möglich ist auch, dass der Milchwagen eine Fernbedienung aufweist, an der das Bedienelement angeordnet ist. In jedem Fall befindet sich die Abgabevorrichtung zum Zeitpunkt der Betätigung des Bedienelements auf der für den gesamten Abgabevorgang maßgeblichen Höhe, beispielsweise unmittelbar oberhalb eines Tränkeeimers. Es ist daher sinnvoll, die Höhe zum Zeitpunkt der Betätigung des Bedienelements zu erfassen.

In einer Ausgestaltung ist die Dosiersteuerung dazu ausgebildet, die Pumpenlaufzeit unter Berücksichtigung eines Füllstands im Vorratsbehälter zu ermitteln. Der Füllstand im Vorratsbehälter bestimmt den Pumpenvordruck und ist daher ebenfalls eine wichtige Einflussgröße für die Förderleistung. Die Dosiergenauigkeit kann weiter verbessert werden, indem nicht nur die Höhe der Abgabevorrichtung, sondern auch der Füllstand im Behälter berücksichtigt wird.

In einer Ausgestaltung weist der Milchwagen einen Füllstandsensor auf, der den Füllstand im Vorratsbehälter erfasst. Hierzu eignet sich insbesondere ein Drucksensor, der den hydrostatischen Druck am Boden des Vorratsbehälters oder in einer Verbindungsleitung zwischen dem Vorratsbehälter und der Eingangsseite der Pumpe erfasst. Alternativ kann ein Abstandssensor, beispielsweise ein Ultraschallsensor, eingesetzt werden, um den Füllstand anhand einer Reflexion am Flüssigkeitsspiegel zu erfassen.

In einer Ausgestaltung ist die Dosiersteuerung dazu ausgebildet, die Pumpenlaufzeit unter Berücksichtigung einer Versorgungsspannung der Pumpe zu ermitteln. Insbesondere bei einer Versorgung der Pumpe aus einer Batterie schwankt die Versorgungsspannung abhängig vom Ladezustand der Batterie erheblich. Dies hat ebenfalls einen Einfluss auf die Förderleistung der Pumpe, sodass die Dosiergenauigkeit bei zusätzlicher Berücksichtigung der Versorgungsspannung nochmals verbessert werden kann.

Nachfolgend wird die Erfindung anhand eines in einer Figur dargestellten Ausführungsbeispiels näher erläutert.

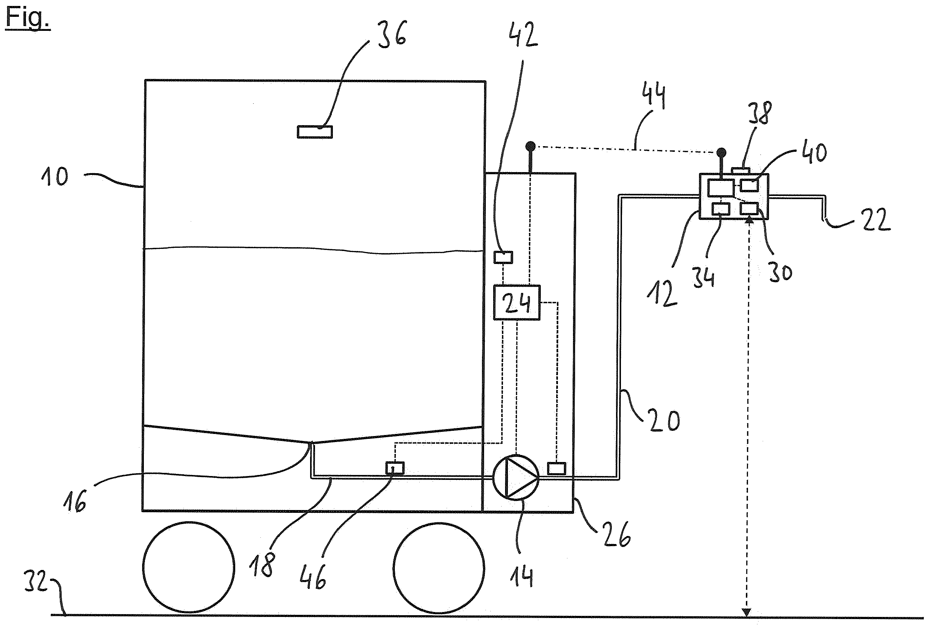

Die einzige Figur zeigt einen Milchwagen in einer schematischen Darstellung.

Der Milchwagen weist einen Vorratsbehälter 10, eine Abgabevorrichtung 12 und eine Pumpe 14 auf. Der Vorratsbehälter 10 hat ein Volumen von beispielsweise 250 l und ist von einem nicht dargestellten Deckel verschlossen. Am Behälterboden befindet sich ein Auslass 16, der über eine erste Leitung 18 mit einer Eingangsseite (Saugseite) der Pumpe 14 verbunden ist. Die Ausgangsseite (Druckseite) der Pumpe 14 ist über eine zweite Leitung 20 mit der Abgabevorrichtung 12 verbunden. Die Abgabevorrichtung 12 hat einen nicht dargestellten Handgriff und eine Abgabeöffnung 22.

Mithilfe der Pumpe 14 kann das im Vorratsbehälter 10 befindliche, flüssige Futtermittel zur Abgabevorrichtung 12 gefördert und durch deren Abgabeöffnung 22 abgegeben werden, beispielsweise in einen nicht dargestellten Tränkeeimer. Hierzu wird die Pumpe 14 von der Dosiersteuerung 24 angesteuert. Die Dosiersteuerung 24 und die Pumpe 14 befinden sich in einem seitlich des Vorratsbehälters 10 angeordneten Elektronikkasten 26.

Um eine vorgegebene Abgabemenge des flüssigen Futtermittels abzugeben, steuert die Dosiersteuerung die Pumpe 14 für eine bestimmte Pumpenlaufzeit an. Die Pumpenlaufzeit wird von der Dosiersteuerung 24 unter Berücksichtigung einer Höhe ermittelt, in der sich die Abgabevorrichtung 12 befindet. Um die Höhe zu erfassen, weist der Milchwagen unterschiedliche Sensormittel auf. Es versteht sich, dass die Erfindung auch mit lediglich einem der erläuterten Sensormittel oder mit einer Kombination von zwei oder mehr Sensormitteln ausgeführt werden kann.

Zu den Sensormitteln zählt ein Drucksensor 28, der in der zweiten Leitung 20 an der Ausgangsseite der Pumpe 14 angeordnet ist und dort einen hydrostatischen Druck erfasst.

Eine andere Möglichkeit zum Erfassen der Höhe besteht in einem Abstandssensor 30, der an der Abgabevorrichtung 12 angeordnet ist. Er erfasst einen Abstand der Abgabevorrichtung 12 vom Boden 32 mit Ultraschall.

Eine andere Möglichkeit zur Erfassung der Höhe besteht in einem Beschleunigungssensor 34, der an der Abgabevorrichtung 12 angeordnet ist. Um die Höhe der Abgabevorrichtung 12 auf Grundlage der Messwerte des Beschleunigungssensors 34 zu ermitteln, kann die Abgabevorrichtung 12 zunächst auf einer Referenzhöhe, die durch eine Halterung 36 zur Aufnahme der Abgabevorrichtung 12 am Milchwagen bestimmt wird, angeordnet werden. Wird die Abgabevorrichtung 12 aus der Halterung 36 entnommen, werden die Ausgangssignale des Beschleunigungssensors 34 von einer ebenfalls an der Abgabevorrichtung 12 angeordneten Auswerteeinrichtung fortlaufend ausgewertet. Auf diese Weise kann die Höhe der Abgabevorrichtung 12 ermittelt werden, in der sich diese beim Auslösen eines Abgabevorgangs mithilfe des an der Abgabevorrichtung 12 angeordneten Bedienelements 38 befindet.

Eine andere Möglichkeit zur Erfassung der Höhe der Abgabenvorrichtung 12 besteht in zwei Drucksensoren, die jeweils einen Umgebungsluftdruck erfassen. Ein solcher Drucksensor 40 ist an der Abgabevorrichtung 12 angeordnet, ein weiterer solcher Drucksensor 42 befindet sich im Elektronikkasten 26. Die Dosiersteuerung 24 ermittelt auf Grundlage der von den beiden Drucksensoren 40, 42 erfassten Informationen eine Druckdifferenz, die Aufschluss über die Höhe der Abgabevorrichtung 12 bietet.

Die von den an der Abgabevorrichtung 12 angeordneten Sensormitteln gelieferten Signale oder auf deren Grundlage der in der Abgabevorrichtung 12 ermittelte Messwerte können über eine Funkstrecke 44 an die Dosiersteuerung 24 übermittelt werden.

Bei der Ermittlung der Pumpenlaufzeit kann der Milchwagen über die Höhe der Abgabevorrichtung 12 hinaus einen Füllstand im Vorratsbehälter 10 berücksichtigen, der mithilfe eines in der ersten Leitung 18 angeordneten Füllstandsensors 46 erfasst wird. Außerdem kann die Spannung einer nicht dargestellten Batterie berücksichtigt werden, aus der die Pumpe 14 versorgt wird.

### Liste der verwendeten Bezugszeichen:

- 10: Vorratsbehälter
- 12: Abgabevorrichtung
- 14: Pumpe
- 16: Auslass
- 18: erste Leitung
- 20: zweite Leitung
- 22: Abgabeöffnung
- 24: Dosiersteuerung
- 26: Elektronikkasten
- 28: Drucksensor (hydrostatisch)
- 30: Abstandssensor
- 32: Boden
- 34: Beschleunigungssensor
- 36: Halterung
- 38: Bedienelement
- 40: Drucksensor (barometrisch)
- 42: weiterer Drucksensor (barometrisch)
- 44: Funkstrecke
- 46: Füllstandssensor

## Patentansprüche

1. Milchwagen zur Fütterung von Nutztieren, insbesondere Kälbern, mit
• einem Vorratsbehälter (10) zur Aufnahme eines flüssigen Nahrungsmittels,
• einer Abgabevorrichtung (12) zum Abgeben des flüssigen Nahrungsmittels,
• einer Pumpe (14) zum Fördern des flüssigen Nahrungsmittels aus dem Vorratsbehälter (10) zu der Abgabevorrichtung (12) und
• einer Dosiersteuerung (24), die dazu ausgebildet ist, die Pumpe (14) für eine definierte Pumpenlaufzeit anzusteuern, um eine vorgegebene Abgabemenge des flüssigen Nahrungsmittels abzugeben, **gekennzeichnet durch**
• Sensormittel, die dazu ausgebildet sind, eine Höhe zu erfassen, in der die Abgabevorrichtung (12) angeordnet ist, wobei die Dosiersteuerung (24) dazu ausgebildet ist, die Pumpenlaufzeit unter Berücksichtigung dieser Höhe zu ermitteln.

2. Milchwagen nach Anspruch 1, **dadurch gekennzeichnet, dass** die Sensormittel einen Drucksensor (28) aufweisen, der so angeordnet ist, dass er einen hydrostatischen Druck an einem Ausgang der Pumpe (14) erfasst.

3. Milchwagen nach Anspruch 1 oder 2, **dadurch gekennzeichnet, dass** die Sensormittel einen Abstandssensor (30) aufweisen, der an der Abgabevorrichtung (12) angeordnet und dazu ausgebildet ist, einen Abstand der Abgabevorrichtung (12) vom Boden zu erfassen.

4. Milchwagen nach einem der Ansprüche 1 bis 3, **dadurch gekennzeichnet, dass** die Sensormittel einen Beschleunigungssensor (34) aufweisen, der an der Abgabevorrichtung (12) angeordnet ist.

5. Milchwagen nach einem der Ansprüche 1 bis 4, **dadurch gekennzeichnet, dass** die Sensormittel einen Drucksensor (40) aufweisen, der an der Abgabevorrichtung (12) angeordnet ist und einen Umgebungsluftdruck erfasst.

6. Milchwagen nach einem der Ansprüche 1 bis 5, **dadurch gekennzeichnet, dass** die Dosiersteuerung (24) eine Auswerteeinrichtung umfasst, die dazu ausgebildet ist, ein Ausgangssignal der Sensormittel von einem ersten Zeitpunkt an, in dem sich die Abgabevorrichtung (12) auf einer Referenzhöhe befindet, bis zu einem Abgabezeitpunkt fortlaufend auszuwerten, um die Höhe im Abgabezeitpunkt zu bestimmen.

7. Milchwagen nach Anspruch 6, **dadurch gekennzeichnet, dass** der Milchwagen eine Halterung (36) für die Abgabevorrichtung (12) aufweist, die die Referenzhöhe bestimmt.

8. Milchwagen nach einem der Ansprüche 5 bis 7, **dadurch gekennzeichnet, dass** die Sensormittel einen weiteren Drucksensor (42) aufweisen, der in einer festen Höhe am Milchwagen angeordnet ist und einen Umgebungsluftdruck erfasst.

9. Milchwagen nach einem der Ansprüche 1 bis 8, **dadurch gekennzeichnet, dass** der Milchwagen ein Bedienelement (38) zum Auslösen eines Abgabevorgangs aufweist und die Dosiersteuerung (24) dazu ausgebildet ist, die Pumpenlaufzeit unter Berücksichtigung einer zum Zeitpunkt einer Betätigung des Bedienelements (38) erfassten Höhe zu ermitteln.

10. Milchwagen nach einem der Ansprüche 1 bis 9, **dadurch gekennzeichnet, dass** die Dosiersteuerung (24) dazu ausgebildet ist, die Pumpenlaufzeit unter Berücksichtigung eines Füllstands im Vorratsbehälter (10) zu ermitteln.

11. Milchwagen nach einem der Ansprüche 1 bis 10, **dadurch gekennzeichnet, dass** der Milchwagen einen Füllstandssensor (46) aufweist, der einen Füllstand im Vorratsbehälter (10) erfasst.

12. Milchwagen nach einem der Ansprüche 1 bis 11, **dadurch gekennzeichnet, dass** die Dosiersteuerung (24) dazu ausgebildet ist, die Pumpenlaufzeit unter Berücksichtigung einer Versorgungsspannung der Pumpe (14) zu ermitteln.
